# EUROPEAN PATENT APPLICATION

(11) **EP 3 122 095 A1**
(43) Date of publication of application: **25.01.2017**
(21) Application number: 14886555.3
(22) Date of filing: 01.12.2014
(51) Int. Cl.: H04W 16/28, H04B 7/04, H04J 99/00, H04W 24/10, H04W 72/04

(54) **BASE STATION AND USER DEVICE**

(30) Priority: 20.03.2014 JP 2014059182
(71) Applicant: NTT DOCOMO, INC., Chiyoda-ku Tokyo 100-6150 (JP)
(72) Inventor: KAKISHIMA, Yuichi, Tokyo 100-6150 (JP); NAGATA, Satoshi, Tokyo 100-6150 (JP); KISHIYAMA, Yoshihisa, Tokyo 100-6150 (JP); NA, Chongning, Beijing 100190 (CN)
(74) Representative: Hoffmann Eitle
(86) International application number: PCT/JP2014/081699
(87) International publication number: WO 2015/141070

(57) **Abstract**

The present disclosure relates to techniques for implementing efficient beam forming in 3D MIMO. One aspect of the present invention relates to a base station, comprising: a beam forming unit configured to form multiple directional beams in accordance with a predetermined beam arrangement; a transmission and reception unit configured to transmit reference signals in the formed multiple directional beams; and a feedback information acquisition unit configured to acquire feedback information from user equipment receiving the reference signals.

## Description

### TECHNICAL FIELD

The present invention relates to a radio communication system.

### BACKGROUND ART

In Releases 8-11 of 3GPP (Third Generation Partnership Project), techniques for forming beams in the horizontal direction at a base station having multiple horizontally arranged antenna ports are employed. Also in Release 12, in order to further improve system characteristics, beam forming techniques (3D MIMO (Multiple-Input Multiple-Output)) are being discussed by using multiple arbitrarily arranged antenna ports where the horizontal arrangement is more generalized. For example, techniques for forming beams not only in the horizontal direction but also in the vertical direction at a base station having multiple antenna ports two-dimensionally arranged in the horizontal and vertical directions are being discussed.

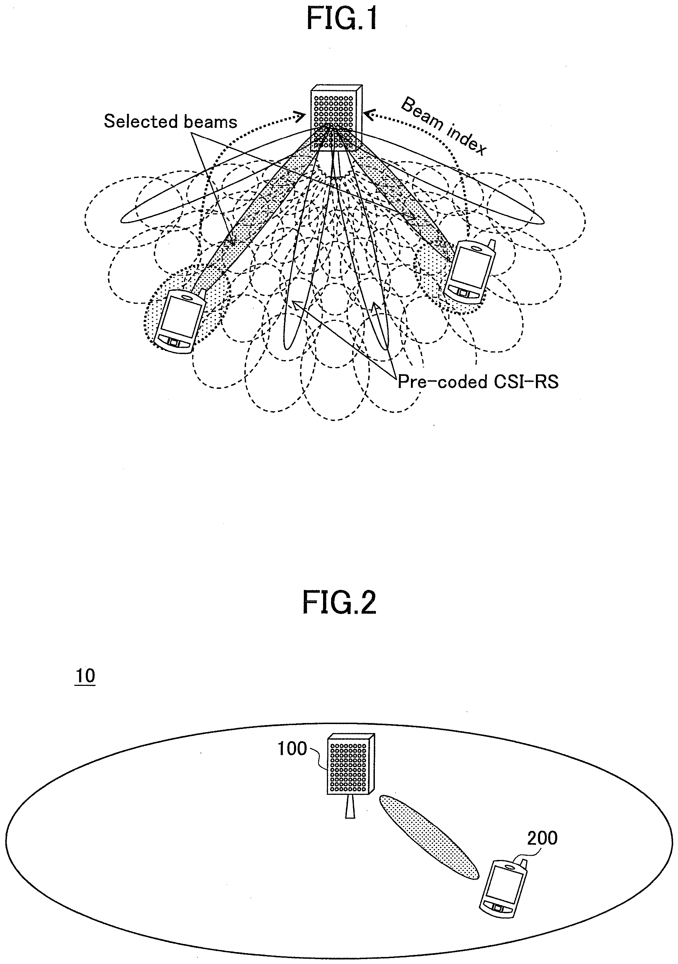

In the 3D MIMO with such arbitrarily arranged antenna ports, a base station uses multiple antenna ports arranged in a predetermined beam arrangement to form directional beams in the horizontal and vertical directions. As illustrated in FIG. 1, the base station transmits directional beams, that is, precoded signals from the respective antenna ports. In the illustrated example, the base station transmits precoded CSI-RSs (Channel State Information-Reference Signals) for reception quality measurement at user equipment as the precoded signals. The user equipment measures reception quality of the precoded CSI-RSs transmitted from the respective antenna ports, selects a directional beam having good reception quality (for example, a directional beam having the maximum reception power) based on the measured reception quality and feeds a beam index of the selected directional beam back to the base station.

As implementations of the 3D MIMO, vertical beam forming and FD (Full Dimension)-MIMO are known. In 3GPP specifications, the case where the number of transmission antenna ports is smaller than or equal to 8 is referred to as the vertical beam forming, and the case where the number of transmission antenna ports is greater than 8 (such as 16, 32 and 64) is referred to as the FD-MIMO. In the future, it is assumed that more than hundreds to ten thousands of antennas may be used (Massive MIMO or Higher-order MIMO).

See 3GPP TS 36.211 V12.0.0 (2013-12) for details of the 3D MIMO, for example.

### SUMMARY OF INVENTION

### [PROBLEM TO BE SOLVED BY THE INVENTION]

One object of the present invention is to provide techniques for implementing efficient beam forming in the 3D MIMO.

### [MEANS FOR SOLVING THE PROBLEM]

In order to achieve the above object, one aspect of the present invention relates to a base station, comprising: a beam forming unit configured to form multiple directional beams in accordance with a predetermined beam arrangement; a transmission and reception unit configured to transmit reference signals in the formed multiple directional beams; and a feedback information acquisition unit configured to acquire feedback information from user equipment receiving the reference signals.

Another aspect of the present invention relates to user equipment comprising: a transmission and reception unit configured to receive reference signals transmitted from a base station in multiple directional beams arranged in accordance with a predetermined beam arrangement; a measurement unit configured to measure reception quality of the received reference signals; and a feedback information generation unit configured to generate feedback information regarding reception quality of the measured reference signals.

### [ADVANTAGE OF THE INVENTION]

According to the present invention, it is possible to provide techniques for implementing efficient beam forming in the 3D MIMO.

### BRIEF DESCRIPTION OF DRAWINGS

FIG. 1 is a schematic diagram for illustrating beam forming in the 3D MIMO;
FIG. 2 is a schematic diagram for illustrating a radio communication system according to one embodiment of the present invention;
FIG. 3 is a schematic diagram for illustrating exemplary arrangements of antenna elements in a base station according to one embodiment of the present invention;
FIG. 4 is a block diagram for illustrating an arrangement of the base station according to one embodiment of the present invention;
FIG. 5 is a schematic diagram for illustrating beam forming in accordance with a densely-packed arrangement according to one embodiment of the present invention;
FIG. 6 is a schematic diagram for illustrating beam forming in a lattice-shaped arrangement according to one embodiment of the present invention;
FIG. 7 is a schematic diagram for illustrating variations of beam forming in the lattice-shaped arrangement according one embodiment of the present invention;
FIG. 8 is a schematic diagram for illustrating a variation of beam forming in the lattice-shaped arrangement according one embodiment of the present invention;
FIG. 9 is a block diagram for illustrating an arrangement of user equipment according to one embodiment of the present invention;
FIG. 10 is a schematic diagram for illustrating beam measurement results according to one embodiment of the present invention; and
FIG. 11 is a flowchart for illustrating a beam transmission operation in a base station according to one embodiment of the present invention.

### EMBODIMENTS OF THE INVENTION

Embodiments of the present invention are described below with reference to the drawings.

A base station for implementing efficient beam forming in the 3D MIMO is disclosed. In embodiments as stated below, the base station forms multiple directional beams in accordance with a predetermined beam arrangement and transmits reference signals in the formed multiple directional beams. The predetermined beam arrangement includes a densely-packed arrangement where the respective directional beams are arranged to have six adjacent directional beams, a lattice-shaped arrangement where multiple directional beams are arranged in a lattice shape with respect to the horizontal and vertical directions to divide a space in the horizontal and vertical directions or in orthogonal coordinate axes efficiently, or the like. Also, the base station can also use precoded CSI-RSs as the reference signals.

After transmitting the reference signals, the base station obtains feedback information from user equipment receiving the reference signals. For example, the feedback information may be a beam index of a directional beam selected by the user equipment based on measurement results of reception quality of the reference signals. Based on the obtained feedback information, the base station transmits various signals, such as data signals and control signals, to the user equipment in a directional beam suitable for that user equipment. In this manner, in the 3D MIMO, the base station can use a directional beam corresponding to the position of the user equipment to transmit the various signals to the user equipment efficiently.

A radio communication system according to one embodiment of the present invention is described with reference to FIG. 2. The radio communication system according to embodiments as stated below supports 3D MIMO communication. FIG. 2 is a schematic diagram for illustrating a radio communication system according to one embodiment of the present invention.

As illustrated in FIG. 2, the radio communication system 10 has a base station (eNB) 100 and user equipment (UE) 200. In the illustrated embodiment, the radio communication system 10 has only the single base station 100 and the single user equipment 200, but it typically has a large number of base stations 100 and a large number of user equipments 200. Specifically, the large number of base stations 100 are disposed to cover a service area of the radio communication system 10, and the respective user equipments 200 communicatively connect for any of the base stations 100 and perform MIMO communication with the connecting base stations 100.

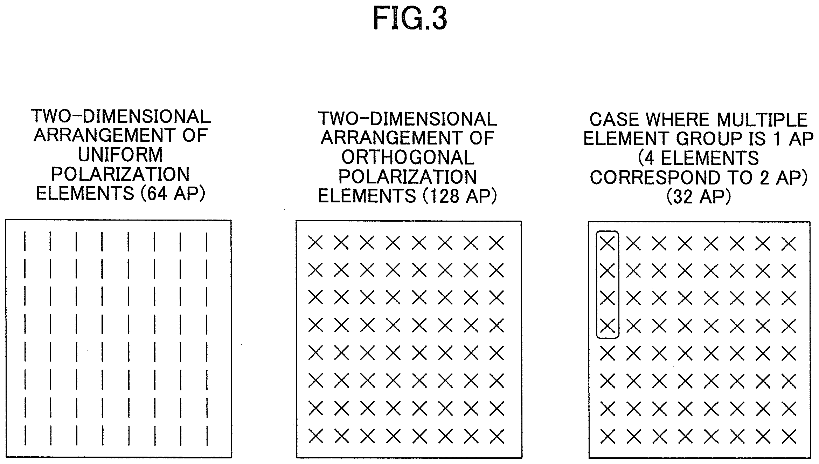

The base station 100 uses the 3D MIMO to communicate with the user equipment 200. The base station 100 uses multiple antenna ports arranged in a predetermined beam arrangement to form directional beams . For example, as illustrated in FIG. 3, the base station 100 uses multiple antenna ports two-dimensionally arranged in the horizontal and vertical directions to form directional beams in the horizontal and vertical directions. These antenna ports (APs) may be composed of antenna elements using uniform polarization elements or orthogonal polarization elements. For example, in the left side illustration in FIG. 3, the uniform polarization elements are two-dimensionally arranged as illustrated, and 64 antenna ports are formed. Also in the middle illustration in FIG. 3, orthogonal polarization elements are two-dimensionally arranged as illustrated, and 128 antenna ports are formed. Furthermore, in the right side illustration in FIG. 3, orthogonal polarization elements are two-dimensionally arranged as illustrated, and one antenna port is formed of multiple elements. The base station 100 is not limited to the illustrated antenna element arrangements, and any appropriate antenna element arrangement that can form multiple directional beams to cover a cell of the base station 100 by using multiple antenna ports may be used. For example, the antenna elements may be arranged in either the horizontal direction or the vertical

direction.

The user equipment 200 uses the 3D MIMO to communicate with the base station 100. The user equipment 200 is typically a mobile phone, a smartphone, a tablet, a mobile router or the like, but is not limited to it, may be any appropriate user equipment with a radio communication function. In a typical hardware arrangement, the user equipment 200 has a CPU (Central Processing Unit) such as a processor, a memory device such as a RAM (Random Access Memory), an auxiliary storage device such as a hard disk device, a communication device for communicating radio signals, an interface device for interfacing with users, and so on. Functions of the user equipment 200 as stated below may be implemented by the CPU loading data and programs stored in the auxiliary storage device via the communication device and/or the interface device into the memory device and processing the data in accordance with the loaded programs.

The base station 100 transmits various signals, such as data signals and control signals, to the user equipment 200 in directional beams from respective antenna ports and receives various signals, such as data signals and control signals, from the user equipment 200 via the antenna ports. In the 3D MIMO, the base station 100 uses an appropriate directional beam corresponding to the position of the user equipment 200 to transmit signals to the user equipment 200. In order to determine a directional beam suitable for the user equipment 200, the base station 100 transmits precoded references signals for reception quality measurement at the user equipment 200 by transmitting directional beams from the respective antenna ports.

In one embodiment, the base station 100 transmits precoded CSI-RSs (Channel State Information-Reference Signals) as the precoded reference signals for reception quality measurement. In general, a precoded signal increases beam gain but narrows a beam width. Accordingly, a number of beam directions almost proportional to the number of antenna elements are required for omnidirectional coverage of the base station 100 (for example, twice the number of beam directions compared to the number of antenna elements), and if a large number of antenna elements are used, it is necessary to form a large number of directional beams or precoded reference signals.

The user equipment 200 measures reception quality of the precoded CSI-RSs transmitted from the respective antenna ports in the base station 100 and selects a directional beam having good reception quality based on the measured reception quality. Note that the reference signal transmitted in a directional beam is not limited to the CSI-RS and may be a PSS (Primary Synchronization Signal), a SSS (Secondary Synchronization Signal), an Enhanced SS, a Discovery signal, a DM-RS (Data Demodulation-Reference Signal) or the like.

In one embodiment, for example, the user equipment 200 may select a directional beam having the maximum reception power or the best SINR or select a directional beam capable of reducing inter-user interference in MU (Multi User)-MIMO (that is, to be applied to simultaneously multiplexed UEs) or a directional beam having low interference from other users. The user equipment 200 feeds a beam index of the selected directional beam back to the base station 100. Here, the beam indices of the respective directional beams are indicated from the base station 100 and are associated with timings and/or frequencies for transmitting the respective directional beams, for example. Upon receiving the feedback information, the base station 100 uses an antenna port corresponding to the indicated beam index to communicate with the user equipment 200.

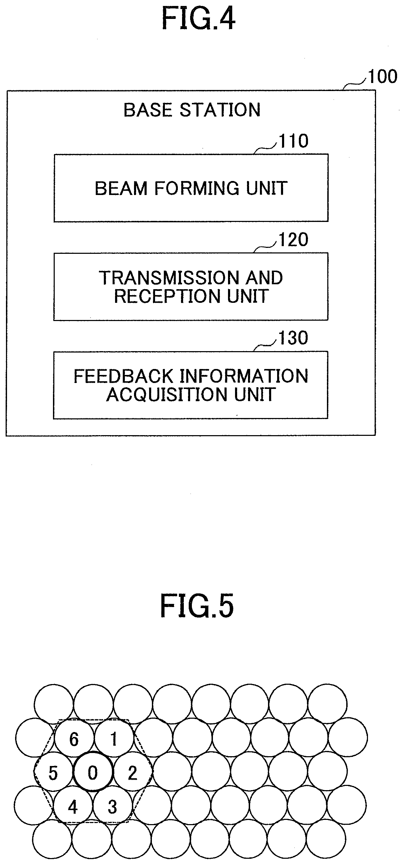

Next, a base station according to one embodiment of the present invention is described with reference to FIG. 4. FIG. 4 is a block diagram for illustrating an arrangement of the base station according to one embodiment of the present invention.

As illustrated in FIG. 4, the base station 100 has a beam forming unit 110, a transmission and reception unit 120 and a feedback information acquisition unit 130.

The beam forming unit 110 forms multiple directional beams in accordance with a predetermined beam arrangement. The predetermined beam arrangement is typically a beam arrangement on a plane specified with two directions including the horizontal and vertical directions. However, the present invention is not limited to it, and orthogonal or three-dimensional beam arrangements may be used, for example.

In one embodiment, the predetermined beam arrangement may be a densely-packed arrangement where the respective directional beams are arranged to have six adjacent directional beams. For example, the beam forming unit 110 may form six directional beams (beam indices 1-6) adjacent to the centered directional beam of the beam index 0, as illustrated in FIG. 5. According to the densely-packed arrangement, a coverage area of a cell of the base station 100 can be covered without density or scarcity, and the number of adjacent beams (= 6) can be relatively fewer, which can reduce the number of bits required to transmit information regarding the adjacent beams.

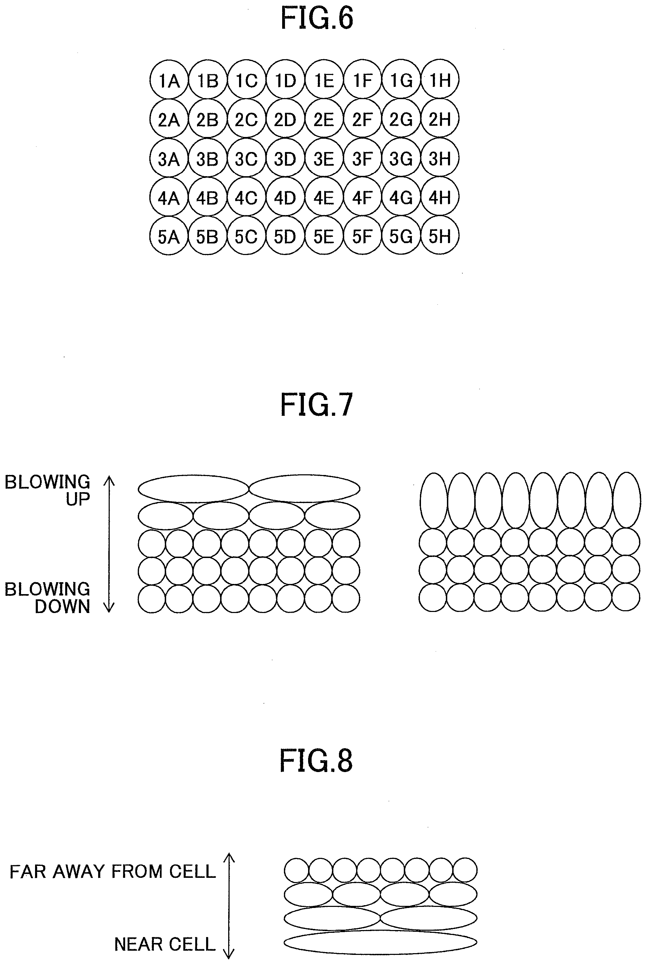

In another embodiment, the predetermined beam arrangement may be a lattice-shaped arrangement where the multiple directional beams are arranged in a lattice shape with respect to horizontal and vertical directions or two orthogonal directions. For example, the beam forming unit 110 may form the multiple directional beams in a lattice-shaped arrangement as illustrated in FIG. 6. In this case, as illustrated, for the multiple directional beams, reference symbols "1" to "5" are assigned with respect to the vertical direction, and reference symbols "A" to "H" are assigned with respect to the horizontal direction. The respective directional beams are identified by combinations of these two reference symbols.

Here, the respective directional beams may be identified by beam indices assigned to represent adjacency of the multiple directional beams in a predetermined two-dimensional arrangement. For example, in the lattice-shaped arrangement, the respective directional beams are identified by beam indices each of which is composed of a horizontal position and a vertical position, as illustrated in FIG. 5. In this case, beams adjacent to a directional beam identified by the beam index (X, Y) correspond to eight directional beams identified by the beam indices (X-1, Y-1), (X-1, Y), (X-1, Y+1), (X, Y-1), (X, Y+1), (X+1, Y-1), (X+1, Y) and (X+1, Y+1). Also in the densely-packed arrangement, it will be apparent that six beams adjacent to a certain directional beam can be identified by numbering directional beams in the first row from the top in FIG. 6 from the left as 1A, 1B, ..., 1H, directional beams in the second row from the left as 2A, 2B, ..., 2I and so on.

In one embodiment, the beam forming unit 110 may form the multiple directional beams to cause an equal number of user equipments to be in coverage areas covered by the respective directional beams. Specifically, the beam forming unit 110 does not have to apply a uniform beam width as illustrated in FIGS. 5 and 6 and may apply different beam widths to respective antenna ports. The beam forming unit 110 may adjust beam widths of the respective antenna ports to form multiple directional beams such that an area having a large number of user equipments 200 includes a relatively large number of directional beams having a small beam width, that is, a relatively large number of small coverage areas whereas an area having a small number of user equipments 200 includes a relatively small number of directional beams having a large beam width, that is, a relatively small number of large coverage areas. For example, as illustrated in FIG. 7, the beam forming unit 110 may form multiple directional beams such that the coverage areas are large with respect to the upper or blowing up direction and are small with respect to the lower or blowing down direction. In general, the lower or blowing down direction corresponds to the ground direction, and it is assumed that a larger number of user equipments 200 are located in the lower or blowing down direction than in the upper or blowing up direction.

In another embodiment, the beam forming unit 110 may form the multiple directional beams to cause coverage areas covered by the respective directional beams to have an equal size. If the same beam width is applied to a nearby area and a faraway area from the base station 100, a relatively large coverage area would be formed in the faraway area from the base station 100, which may lead to a biased beam selection rate. In other words, in cases where the MU-MIMO is assumed, if the beam selection is biased, it would be difficult to determine a user group. Accordingly, as illustrated in FIG. 8, the beam forming unit 110 can provide coverage areas having an almost uniform size by dividing the faraway area from the base station 100 finely. Specifically, the beam forming unit 110 may increase the number of divisions in proportion to the distance from the base station 100.

The transmission and reception unit 120 transmits reference signals in the formed multiple directional beams. Specifically, the transmission and reception unit 120 transmits precoded CSI-RSs from respective antenna ports in the directional beams formed by the beam forming unit 110. However, the present invention is not limited to it, and the transmission and reception unit 120 may precode a PSS, a SSS, an Enhanced SS, a Discovery signal, a DM-RS or the like, for example, and transmit it from the respective antenna ports.

In one embodiment, the transmission and reception unit 120 may transmit the reference signals in directional beams arranged along one of the horizontal and vertical directions or one of the two orthogonal directions at a first stage and transmit the reference signals in directional beams arranged along the other direction at a second stage. In this manner, the base station 100 can obtain feedback information from the user equipment 200 at the respective stages by transmitting the reference signals at the two stages and narrow down the reference signals for transmission at the second stage based on the feedback information obtained at the first stage.

The feedback information acquisition unit 130 acquires feedback information from user equipment 200 receiving the reference signals. For example, the feedback information may be a beam index of a directional beam selected based on measurement results of reception quality of the reference signals at the user equipment 200.

As stated above, in the embodiment where the transmission and reception unit 120 transmits the reference signals in directional beams arranged along one of the horizontal and vertical directions or one of the two orthogonal directions at the first stage and transmits the reference signals in directional beams arranged along the other direction at the second stage, the feedback information acquisition unit 130 may acquire respective measurement results of directional beams in the horizontal and vertical directions or respective measurement results of directional beams in the two orthogonal directions from the user equipment 200 separately. In other words, the feedback information acquisition unit 130 may receive feedback information regarding reception quality of the reference signals transmitted in directional beams arranged along one of the horizontal and vertical directions or one of the two orthogonal directions after the first stage and receive feedback information regarding reception quality of the reference signals transmitted in the directional beams arranged along the other direction after the second stage. Here, beam selection accuracy may be improved by determining the directional beams for the second stage based on the feedback information obtained at the first stage.

For example, the transmission and reception unit 120 transmits precoded CSI-RSs of 3A to 3H at the first stage, and the user equipment 200 determines that 3B corresponds to the maximum reception power and feeds "B" back to the base station 100. Upon receiving the feedback information, the transmission and reception unit 120 transmits precoded CSI-RSs of 1B to 5B at the second stage, and the user equipment 200 determines that 2B corresponds to the maximum reception power and feeds "2" back to the base station 100. Upon receiving the feedback information, the base station 100 can determine that the user equipment 200 has selected the beam index 2B. In this manner, the user equipment 200 can measure reception quality of directional beams in the horizontal and vertical directions separately and feed the respective measurement results in the horizontal and vertical directions separately back to the base station 100. As a result, the base station 100 can adjust the reference signals to be transmitted at the second stage based on the feedback information for the first stage.

Alternatively, the transmission and reception unit 120 may transmit precoded CSI-RSs in 3A to 3H at the first stage, and the user equipment 200 may determine that 3B corresponds to the maximum reception power and feed "B" back to the base station 100. Upon receiving the feedback information, the transmission and reception unit 120 may transmit precoded CSI-RSs in 1D to 5D without use of the feedback information at the second stage, for example. This is because the transmission and reception unit 120 does not transmit reference signals by focusing on the certain user equipment 200 but makes the reference signals available to all the user equipments 200. The user equipment 200 determines that 2D corresponds to the maximum reception power and feeds "2" back to the base station 100. Upon receiving the feedback information, the base station 100 can determine that the user equipment 200 has selected the beam index 2B.

In one embodiment, if the user equipment 200 feeds the respective measurement results of reception quality of directional beams in the horizontal and vertical directions or the respective measurement results of reception quality of directional beams in two orthogonal directions separately back to the base station 100, the feedback information acquisition unit 130 may cause the user equipment 200 to feed the measurement results in either the horizontal direction or the vertical direction or the measurement results in either of the two orthogonal directions back to the base station 100 more frequently. For example, when the user equipment 200 is moving in the horizontal direction with respect to the base station 100, the feedback information acquisition unit 130 may cause the user equipment 200 to feed the measurement results of reception quality of directional beams in the horizontal direction back to the base station 100 more frequently. On the other hand, when the user equipment 200 is moving in the vertical direction with respect to the base station 100, the feedback information acquisition unit 130 may cause the user equipment 200 to feed the measurement results of reception quality of directional beams in the vertical direction back to the base station 100 more frequently.

The beam forming unit 110 may adjust formed multiple directional beams based on the feedback information acquired by the feedback information acquisition unit 130. For example, the beam forming unit 110 may transmit directional beams or precoded CSI-RSs densely or finely for directional beams or coverage areas selected by a relatively large number of user equipments 200. Specifically, the beam forming unit 110 may make the directional beams or the precoded CSI-RSs denser or finer by dividing the coverage area.

Alternatively, the transmission and reception unit 120 may adjust transmissions of the formed multiple directional beams based on the feedback information acquired by the feedback information acquisition unit 130. For example, if the transmission and reception unit 120 transmits wide beams for detecting a rough position of the user equipment 200 at the first stage and transmits narrow beams for detecting a fine position of the user equipment 200 at the second stage so as to detect the position of the user equipment 200, at the second stage, the transmission and reception unit 120 may not transmit the narrow beams to coverage areas of unselected wide beams based on the feedback information for the first stage. In this manner, it is possible to reduce transmissions of unnecessary reference signals.

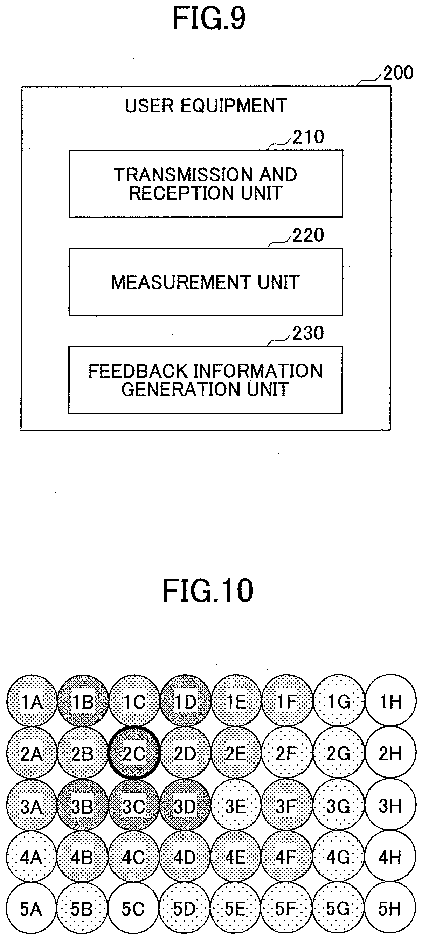

Next, the user equipment according to one embodiment of the present invention is described with reference to FIG. 9. FIG. 9 is a block diagram for illustrating an arrangement of the user equipment according to one embodiment of the present invention.

As illustrated in FIG. 9, the user equipment 200 has a transmission and reception unit 210, a measurement unit 220 and a feedback information generation unit 230.

The transmission and reception unit 210 receives reference signals transmitted from the base station 100 in multiple directional beams arranged in accordance with a predetermined beam arrangement. As stated above, the predetermined beam arrangement may be the densely-packed arrangement, the lattice-shaped arrangement, the arrangements having variable beam widths as illustrated in FIGS. 5-8, or the like. Also, the multiple directional beams may be identified by beam indices assigned to represent adjacency of the multiple directional beams in the predetermined beam arrangement. The beam indices of directional beams are indicated from the base station 100 beforehand.

The measurement unit 220 measures reception quality of the received reference signals. The reception quality may be evaluated based on a SINR (Signal-to-Interference plus Noise power Ratio), a RSRP (Reference Signal Received Power), a RSRQ (Reference Signal Received Quality) or the like, for example.

The feedback information generation unit 230 generates feedback information regarding reception quality of the measured reference signals. The feedback information may be a beam index of a directional beam selected based on measurement results of reference signals at the measurement unit 220, for example.

In the embodiment as stated above where the multiple directional beams are identified by beam indices assigned to represent adjacency of the multiple directional beams in the predetermined beam arrangement, the UE side knows the positional relationship of the multiple directional beams, and the feedback information generation unit 230 may accordingly perform a statistical operation on reception quality measured for the reference signals transmitted in adjacent directional beams to generate the feedback information based on a result of the statistical operation. For example, for each directional beam, the feedback information generation unit 230 may calculate an average (moving average) over a measurement result of the directional beam and measurement results of reception quality of its adjacent directional beams and use the calculated average as reception quality of the directional beam. For example, the directional beam that can achieve the maximum reception quality for the measurement results as illustrated in FIG. 10 is 2C. As a result, if the optimal directional beam is selected based on the single reception quality, the feedback information generation unit 230 would indicate the beam index 2C as the feedback information to the base station 100. On the other hand, if the optimal directional beam is selected based on the average of reception quality of the adjacent directional beams, the feedback information generation unit 230 would select the beam index 3C having more adjacent directional beams having better reception quality as the optimal directional beam and indicate it as the feedback information to the base station 100. It is estimated that the directional beam selected by such interpolation may be able to ensure better reception quality stably even if a radio condition changes to some extent.

In the above-stated embodiments, the feedback information is identified by the beam index, and its granularity is equivalent to the number of beams. However, the present invention is not limited to it, and the feedback information generation unit 230 may generate the feedback information having finer or sparser granularity, for example. For example, if it is determined based on measurement results at the measurement unit 220 that the middle between 2C and 3C is the optimal beam, the feedback information generation unit 230 may indicate a feedback index such as 2.5C to the base station 100.

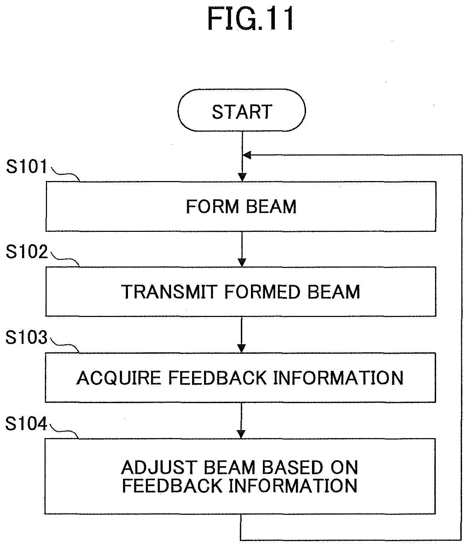

Next, operations of the base station according to one embodiment of the present invention are described with reference to FIG. 11. FIG. 11 is a flowchart for illustrating a beam transmission operation in the base station according to one embodiment of the present invention.

As illustrated in FIG. 11, at step S101, the base station 100 forms multiple directional beams in accordance with a predetermined beam arrangement. As stated above, the predetermined beam arrangement may be the densely-packed arrangement, the lattice-shaped arrangement, the arrangements having variable beam widths as illustrated in FIGS. 5-8, or the like.

At step S102, the base station 100 transmits reference signals in the formed multiple directional beams. As stated above, the base station 100 may transmit precoded CSI-RSs as the reference signals in the multiple directional beams.

At step S103, the base station 100 acquires feedback information from the user equipment 200 receiving the reference signals. As stated above, the feedback information may be a beam index of a directional beam selected by the user equipment 200 based on measurement results of reception quality of the reference signals.

At step S104, the base station 100 adjusts the directional beams formed at step S101 based on the received feedback information.

Although the embodiments of the present invention have been described in detail, the present invention is not limited to the above-stated specific embodiments, and various modifications and variations can be made within the spirit of the present invention as recited in claims.

This international patent application claims benefit of priority based on Japanese Priority Application No. 2014-059182 filed on March 20, 2014, the entire contents of which are hereby incorporated by reference.

### LIST OF REFERENCE SYMBOLS

10: radio communication system
100: base station
200: user equipment

## Claims

1. A base station, comprising:
a beam forming unit configured to form multiple directional beams in accordance with a predetermined beam arrangement;
a transmission and reception unit configured to transmit reference signals in the formed multiple directional beams; and
a feedback information acquisition unit configured to acquire feedback information from user equipment receiving the reference signals.

2. The base station as claimed in claim 1, wherein the predetermined beam arrangement is a densely-packed arrangement where the respective directional beams are arranged to have six adjacent directional beams.

3. The base station as claimed in claim 1, wherein the predetermined beam arrangement is a lattice-shaped arrangement where the multiple directional beams are arranged in a lattice shape with respect to horizontal and vertical directions or two orthogonal directions.

4. The base station as claimed in claim 3, wherein the transmission and reception unit transmits the reference signals in directional beams arranged along one of the horizontal and vertical directions or one of the two orthogonal directions at a first stage and transmits the reference signals in directional beams arranged along the other direction at a second stage.

5. The base station as claimed in claim 4, wherein the feedback information acquisition unit receives feedback information regarding reception quality of the reference signals transmitted in the directional beams arranged along the one direction after the first stage and receives feedback information regarding reception quality of the reference signals transmitted in the directional beams arranged along the other direction after the second stage.

6. The base station as claimed in claim 1, wherein the multiple directional beams are identified by beam indices assigned to represent adjacency of the multiple directional beams in the predetermined beam arrangement.

7. The base station as claimed in claim 1, wherein the beam forming unit forms the multiple directional beams to cause an equal number of user equipments to be in coverage areas covered by the respective directional beams.

8. The base station as claimed in claim 1, wherein the beam forming unit forms the multiple directional beams to cause coverage areas covered by the respective directional beams to have an equal size.

9. User equipment comprising:
a transmission and reception unit configured to receive reference signals transmitted from a base station in multiple directional beams arranged in accordance with a predetermined beam arrangement;
a measurement unit configured to measure reception quality of the received reference signals; and
a feedback information generation unit configured to generate feedback information regarding reception quality of the measured reference signals.

10. The user equipment as claimed in claim 9, wherein the multiple directional beams are identified by beam indices assigned to represent adjacency of the multiple directional beams in the predetermined beam arrangement, and the feedback information generation unit performs a statistical operation on reception quality measured for the reference signals transmitted in adjacent directional beams to generate the feedback information based on a result of the statistical operation.
